Europäisches Patentamt

European Patent Office

Office européen des brevets

(19)

(11) Veröffentlichungsnummer: **0 121 164**
**A2**

(12) # EUROPÄISCHE PATENTANMELDUNG

(21) Anmeldenummer: 84102880.6

(22) Anmeldetag: 15.03.84

(51) Int. Cl.³: **G 05 D 23/19**

(30) Priorität: 15.03.83 DE 3309267

(43) Veröffentlichungstag der Anmeldung:
10.10.84 Patentblatt 84/41

(84) Benannte Vertragsstaaten:
AT BE CH DE FR GB IT LI LU NL SE

(71) Anmelder: Müller, Friedrich
Im Mühlfeld 31
D-7180 Crailsheim(DE)

(72) Erfinder: Müller, Friedrich
Im Mühlfeld 31
D-7180 Crailsheim(DE)

(74) Vertreter: Lauw, Rudolf C. W.
Karwinskistrasse 1
D-8000 München 60(DE)

(54) Anordnung zur Regelung und/oder zur Überwachung der Wärmezufuhr zu einem Warmwasser-Bereiter und/oder Raumwärmeerzeuger.

(57) Die Erfindung bezieht sich auf eine Anordnung zur Regelung und/oder zur Überwachung der Wärmezufuhr (29) zu einem Warmwasser-Bereiter (1) und/oder zu einem Raumwärmeerzeuger (2) mit zumindest einem Regelgerät (6), das mit zumindest einem im/am WW-Bereiter (1) angeordneten Thermofühler (4) und mit zumindest einem Impulsgeber (3) verbunden ist, wobei das Regelgerät (6) nach Unterschreiten einer vom Thermofühler (4) gemessenen WW-Soll-Temperatur ($T_{SW}$) und bei gleichzeitigem Vorliegen eines einen alsbaldigen WW-und/oder KW-Verbrauchs durch WW- oder KW-Entnahme aus einer Zafstelle (7) die Wärmezufuhr (29) zum WW-Bereiter (1) einleitet und bei Überschreiten einer vom Thermofühler (4) gemessenen bestimmten WW-Temperatur die Wärmezufuhr (29) beendet, und wobei das Regelgerät (6) bei Vorliegen gefährlich niedriger Temperaturen im WW-Bereiter akustische, optische, Funk- und/oder telefonisch übertragene Warnsignale abgibt und/oder per Telefonleitung und/oder Funkverbindung über aktuelle Wasser-Meßdaten im WW- und/oder Heizsystem aus der Ferne abfragbar ist, und wobei insbesondere die WW-Erzeugung durch besondere Anordnung mehrerer Thermofühler im/am WW-Bereiter energiesparend im sog. "Maximalbetrieb" oder im "Minimalbetrieb" erfolgen kann.

FIG.1

Friedrich Müller
Im Mühlfeld 31
D-7180 Crailsheim

Anordnung zur Regelung und/oder zur Überwachung der Wärmezufuhr zu einem Warmwasser-Bereiter und/oder Raumwärmeerzeuger

Die Erfindung bezieht sich auf eine Anordnung zur Regelung und/oder zur Überwachung der Wärmezufuhr zu einem Warmwasser-Bereiter (WW-Bereiter) und/oder zu einem Raumwärmeerzeuger und/oder zu einem Raum.

Bei bekannten Anordnungen dieser Art wird die Wärmezufuhr zum WW-Bereiter und/oder zum Raumwärmeerzeuger und/oder zu einem zu beheizenden Raum von nur einem in/an diesem angeordneten Thermofühler eingeleitet, wenn die Ist-Temperatur ein bestimmtes Soll-Limit unterschreitet, oder unterbrochen, wenn die Ist-Temperatur das gesetzte Soll-Limit überschreitet. Dies geschieht jeweils unabhängig davon, ob in absehbarer Zukunft überhaupt mit WW-Verbrauch und/oder mit Raumwärmebedarf zu rechnen sein wird, und wenn ja, ob dann große, mittlere oder kleine WW- oder Raumwärmemengen benötigt werden.

Diese Art der Regelung und/oder Überwachung des Wärmenachschubs für WW-Bereiter und/oder Raumwärmeerzeuger mutet angesichts der allgemeinen Bestrebungen nach Einsparung von knapper und damit teuerer werdenden Energiereserven einerseits und nach Schonung der insbesondere durch Wärmekraftwerke belasteten und bedrohten Umwelt andererseits geradezu vorsintflutlich an.

Betrachtet man von den beiden Energieverbrauchern (WW- und Raumwärmeerzeugung) beispielsweise nur die heute in der Regel praktizierte Art der WW-Bereitung, so steht es außer Frage, daß die in der Industrie, in der öffentlichen Verwaltung und im privaten Wohnbereich auf herkömmliche art millionenfach praktizierte WW-Bereithaltung eine Energieverschwendung ganz großen Stils darstellt. Die bezüglich des tatsächlichen WW-Verbrauchs zeit- und mengenunabhängige WW-Bereithaltung bisherigen Stils nimmt keine Rücksicht darauf, ob beispielsweise in einem Wohnhaus ein WW-Bedarf schon in Kürze oder gar erst nach Ablauf mehrerer Tage, etwa nach einem längeren Wochenende oder nach einem Urlaub, zu erwarten ist. Sie differenziert auch nicht zwischen unterschiedlichen WW-Verbrauchssituationen, etwa, wo beispielsweise Industriebetrieb, Kommunalgebäude, Bürohäuser, Banken, Versicherungen, Schulen, Universitäten Arztpraxen u. dgl. schwerpunktmäßig nur an fünf Werktagen und nur während der Tageszeit von Menschen bevölkert sind, wo jedoch in der übrigen Zeit (zB nachts, an Wochenenden, während Feiertagen und während eines Betriebsurlaubs) Menschenleere herrscht.

Man schaltet die WW-Bereitungsanlage in den vorstehend erwähnten Großgebäuden des Nachts, an Wochenenden und Feiertagen zum einen aus Bequemlichkeit und zum andern insbesondere dann nicht ab oder zumindest auf Sparflamme, wenn dort eine Hausmeisterwohnung oder ein Chefbüro mitzuversorgen ist. In dieser Zeit wird die WW-Bereitstellung in Großgebäuden in der Regel ungedrosselt weitergefahren bzw. aufrechterhalten.

Für die Raumwärmebereithaltung gelten sinngemäß die gleichen Überlegungen, wie sie vorstehend für die WW-Bereithaltung angestellt wurden.

Es ist daher Ziel und Zweck der Erfindung, diese ebenso verschwenderische wie unwirtschaftliche Bereitstellung von WW und/oder Raumwärme durch Schaffung einer Anordnung eingangs genannter Art in Zukunft zu vermeiden, bei der die Wärmezufuhr zu den WW- und/oder Raumwärmeerzeugern nur zu Zeiten mit in Kürze zu erwartendem WW- und/oder Raumwärmebedarf in voraussichtlich benötigter und gegebenenfalls

- 3 -

0121164

beliebig wählbarer, manuell oder automatisch einstellbarer Menge bewirkt werden kann, und bei der dafür gesorgt ist, daß in den vorstehend genannten Wärmeerzeugungsystemen eine bestimmte Mindesttemperatur nicht unterschritten wird.

Diese Aufgabe wird gemäß der Erfindung gelöst durch ein Regelgerät mit einem einen zu erwartenden WW- und/oder Raumwärmebedarf signalisierenden Impulsgeber und mit zumindest einem im/am WW-Bereiter und/oder Raumwärmeerzeuger angeordneten Thermofühler zur Ermittlung der Ist-Temperatur im/am WW-Bereiter und/oder Raumwärmeerzeuger, wobei das Regelgerät

(a) im Falle eines vom Impulsgeber signalisierten voraussichtlich baldigen WW-Verbrauchs aus einer WW-Zapfstelle und/oder Raumwärmebedarfs und einer von einem ersten Thermofühler festgestellten Unterschreitung einer vorher beliebig festsetzbaren WW- und/oder Raum-Soll-Temperatur im WW-Bereiter und/oder Raumwärmeerzeuger und/oder im zu beheizenden Raum einen Steuerbefehl zur Ingangsetzung der Wärmezufuhr zum WW-Bereiter und/oder zum Raumwärmeerzeuger und/oder zum zu beheizenden Raum liefert oder gegebenenfalls

(b) im Falle des Ausbleibens eines Signals des Impulsgebers, jedoch bei Unterschreitung eines bestimmten, vom Thermofühler überwachten, beliebig festsetzbaren, in der Regel unterhalb der WW- und/oder Raum-Soll-Temperatur liegenden WW- und/oder Raum-Mindesttemperatur einen Steuerbefehl zur Ingangsetzung der Wärmezufuhr zum WW-Bereiter und/oder zum Raumwärmeerzeuger und/oder zum Raum liefert, und gegebenenfalls einen Steuerbefehl zu Beendigung der Wärmezufuhr zum WW-Bereiter und/oder zum Raumwärmeerzeuger und/oder zum Raum liefert, sobald die WW- und/oder Raum-Mindesttemperatur um einen bestimmten Temperatur-Differenzbetrag überschritten ist, und

(c) im Falle einer Überschreitung der WW- und/oder Raum-Soll-Temperatur im WW-Bereiter und/oder Raumwärmeerzeu-

- 4. -                           0121164

ger und/oder im zu beheizenden Raum einen Steuerbefehl
zur Beendigung der Wärmezufuhr zum WW-Bereiter und/
oder zum Raumwärmeerzeuger und/oder zum Raum liefert.

Diese Anordnung zur Regelung und Überwachung der Wärmezufuhr zu den Wärmeerzeugungssystemen weist im Vergleich
zu den bekannten Anordnungen dieser Art den Vorteil auf,
daß die Wärmezufuhr im wesentlichen durch einen einen
alsbaldigen WW-Verbrauch und/oder Raumwärmebedarf anzeigenden Impulsgeber mit beeinflußt werden kann bzw. wird,
falls man sich seiner bedient. Unterbleibt ein seitens des
Impulsgebers gegebenes Signal zur Einleitung der Wärmezufuhr zum WW-Bereiter und/oder zum Raumwärmeerzeuger infolge
Ausbleibens von Anzeichen bevorstehenden WW-Verbrauchs
und/oder Raumwärmebedarfs, so unterbleibt zugleich die
Initiierung der Wärmezufuhr zum WW-Bereiter und/oder zum
Raumwärmeerzeuger und/oder zum Raum, auch wenn die darin
herrschende Ist-Temperatur die für den Normalbetrieb festgesetzte Soll-Temperatur unterschreitet. Man vermeidet dadurch die unsinnige ständige Aufrechterhaltung der Soll-
Temperatur im WW-Bereiter und/oder im Raumwärmeerzeuger
und/oder im Raum etwa eines Einfamilienhauses, dessen
Bewohner sich in Urlaub befinden und während dieser Zeit
überhaupt kein WW und/oder keine Raumwärme in ihren Wohnräumen benötigen.

Allerdings sollte die erfindungsgemäße Anordnung so ausgebildet sein, daß dafür Sorge getragen ist, daß die
Ist-Temperatur des im WW- und/oder Raumheizungs-Rohrleitungssystem enthaltenen Wassers nicht unter den Gefrierpunkt absinkt. Es sind daher entsprechende Vorkehrungen
bei der Ausbildung dieser Anordnung zu treffen, durch die
solche Gefahrensituationen automatisch ausgeschlossen sind.
Man könnte beispielsweise im/am WW-Bereiter zur Feststellung der Unterschreitung der vom Benutzer frei einstellbaren WW-Mindesttemperatur und/oder der Minimalsttemperatur
oberhalb des Gefrierpunktes einen zweiten Thermofühler vorsehen und mit dem Regelgerät koppeln, das bei Unterschreitung der Mindest- und/oder der Minimalsttemperatur einen Steuerbefehl zur Einleitung der Wärmezufuhr zum WW-Bereiter gibt und/oder andere geeignete Maßnahmen zur Anzeige der Gefahr des Einfrierens WW-Rohrleitungssystems und/oder der Heizungssystems ergreift. Das Regelgerät der erfindungsgemäßen Anordnung könnte beispielsweise mit einer im/am Gebäude angeordneten, optische und/oder akustische Warnsignale abgebenden Katastrophen-Gerät verbunden sein, das in einer akuten Gefahrensituation automatisch eingeschaltet wird. All dies würde aber nichts nützen, wenn ein solches Warngerät wegen der nicht anwesenden Bewohner eines Gebäudes nicht wahrgenommen werden könnte. In diesem Falle könnte die Frostwarnung auch mittels eines telefonisch und/oder eines per Funk durchgegebenen Signals zu eine weit entfernt liegenden Ort hin übertragen werden, beispielsweise zum Nachbarn, zu Freunden, zu einer Wartungsfirma, an den Urlaubsort u. dgl.. Mancher Urlauber würde seinen Urlaub in größerer Ruhe und Gelassenheit insbesondere im Winter genießen, wenn er wüßte, daß seine wassergefüllten Brauchwasser- und/oder Heizungsrohrleitungen unter der sicheren Obhut eines zuverlässig arbeitenden Frostwächters stehen. Ebenso sicher ließen sich unzählige einsam gelegene Gebirgshütten überwachen, die nur an Wochenenden bewohnt zu sein pflegen. Die Regelung und/oder Überwachung eines Brauchwasser- und/oder Heizungs-Rohrleitungssystems aus der Ferne mittels telefonisch erfolgender und/oder Funkkontrolle könnte noch dahingehend verfeinert werden, daß nicht nur der vorstehend erwähnte Impuls zur Einleitung der Wärmezufuhr zu einem WW-Bereiter und/oder zum Raumwärmeerzeuger durch Fernübertragung an das Regelgerät gesandt wird, sondern auf dem entgegengesetzten Wege aus der Ferne auch detaillierte Informationen über die Wassertemperaturen zuhause abgefragt werden könnten, zB Kesseltemperatur, Ist-Temperaturen an bestimmten Meßpunkten im Hause im Rohrleitungs- und/oder Heizsystem.

Erfinderische Weiterbildungen und vorteilhafte Ausgestaltungen ergeben sich aus den Untersansprüchen.

Der Erfindungsgegenstand wird in nachfolgender Beschreibung bevorzugter Ausführungsformen der Erfindung anhand
der in der Anlage beigefügten Zeichnung näher erläutert.
Es zeigen:

Fig. 1 eine schematische Darstellung einer WW-Bereitung
mittels eines einen WW-Bereiter mit Wärme versorgenden Heizkessels, wobei ein Regelgerät unter
Berücksichtigung der von einem Thermofühler gelieferten Werte sowie der von einem Strömungswächter
ausgehenden Impulse die Wärmezufuhr kontrolliert;

Fig. 2 eine schematische Darstellung gemäß Fig. 1, jedoch
mit zwei im/am WW-Bereiter angeordneten Meßfühlern
und einer Lichtschranke als Impulsgeber;

Fig. 3 eine schematische Darstellung dreier weiterer möglicher Impulsgeber (im Fußboden eingelassener
Trittschalter, handbetätigter Schalter, Ultraschallgerät);

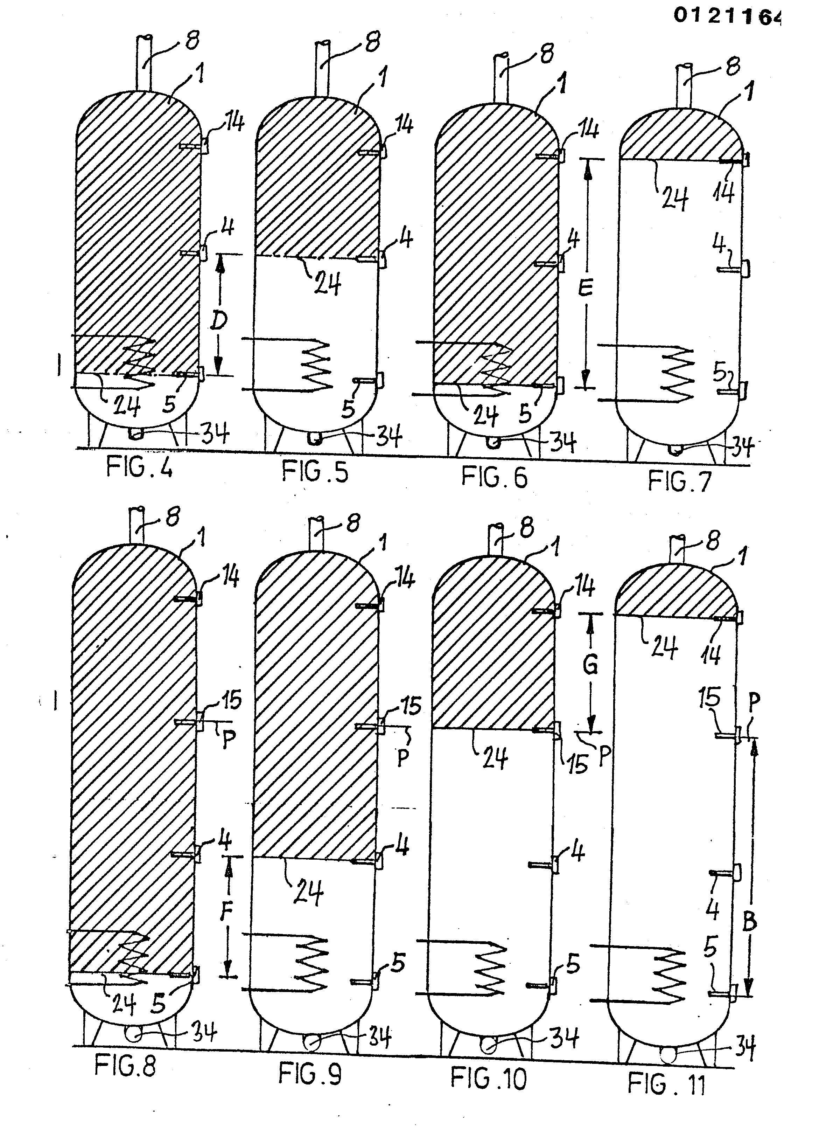

Fig.4+5 einen WW-Bereiter kleineren Volumens (zB 300-500
Liter Fassungsvermögen) mit drei Meßfühlern, im
sogenannten "Maximalbetrieb", wobei der WW-Bereiter
in Fig. 4 gerade bei Beendigung seiner Aufwärmphase,
in Fig. 5 gerade bei Beginn seiner Aufwärmphase
(mit größerer WW-Vorhaltung) gezeigt ist;

Fig.6+7 einen WW-Bereiter kleineren Volumens gemäß Fig.4+5,
im sog. "Minimalbetrieb", wobei der WW-Bereiter
in Fig. 6 gerade bei Beendigung seiner Aufwärmphase,
in Fig. 7 gerade bei Beginn seiner Aufwärmphase
(mit geringerer WW-Vorhaltung) gezeigt ist;

Fig.8+9 einen WW-Bereiter größeren Volumens (zB 3000-5000
Liter Fassungsvermögen) mit vier Meßfühlern, im
sogenannten "Maximalbetrieb", wobei der WW-Bereiter
in Fig. 8 gerade bei Beendigung seiner Aufwärmphase,
in Fig. 9 gerade bei Beginn seiner Aufwärmphase
(mit größerer WW-Vorhaltung) gezeigt ist;

Fig.10+11 einen WW-Bereiter größeren Volumens gemäß Fig.8+9, im sog. "Minimalbetrieb", wobei der WW-Bereiter in Fig.10 gerade bei Beendigung seiner Aufwärmphase (mit bezüglich seines Gesamtvolumens nur teilweiser WW-Füllung), in Fig.11 gerade bei Beginn seiner Aufwärmphase (mit geringerer WW-Vorhaltung) gezeigt ist;

Fig.12+13 schematische Darstellungen des Energieaufwandes zweier unterschiedlich aufgeheizter WW-Bereiter, wobei Fig. 12 den Gesamtenergieaufwand eines 1-mal/Zeiteinheit aufgeheizten WW-Bereiters und Fig. 13 den Gesamtenergieaufwand eines 5-mal/Zeiteinheit aufgeheizten WW-Bereiters gleicher Größe zeigt;

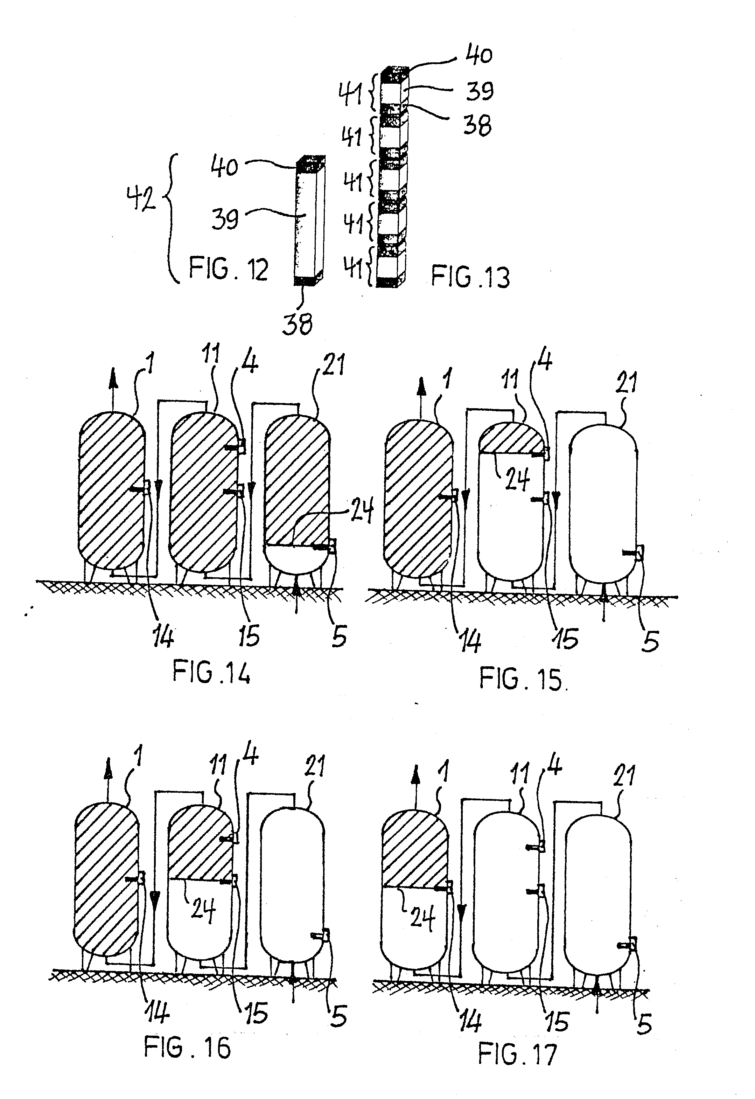

Fig.14+15 eine aus drei WW-Bereitern gebildete WW-Speichereinheit großen Gesamtvolumens (zB 3000-9000 Liter Fassungsvermögen) mit vier Meßfühlern, im sogenannten "Maximalbetrieb", wobei die WW-Bereiter in Fig.14 gerade bei Beendigung ihrer Aufwärmphase (mit bezüglich ihres Gesamtvolumens nahezu vollkommener WW-Füllung), in Fig.15 gerade bei Beginn ihrer Aufwärmphase (mit geringerer WW-Vorhaltung) gezeigt sind;

Fig.16+17 eine aus drei WW-Bereitern gebildete WW-Speichereinheit großen Gesamtvolumens gemäß Fig.14+15, im sogenannten "Minimalbetrieb", wobei die WW-Bereiter in Fig.16 gerade bei Beendigung ihrer Aufwärmphase (mit bezüglich ihres Gesamtvolumens nur teilweiser WW-Füllung), in Fig.17 gerade bei Beginn ihrer Aufwärmphase (mit geringerer WW-Vorhaltung) gezeigt sind und

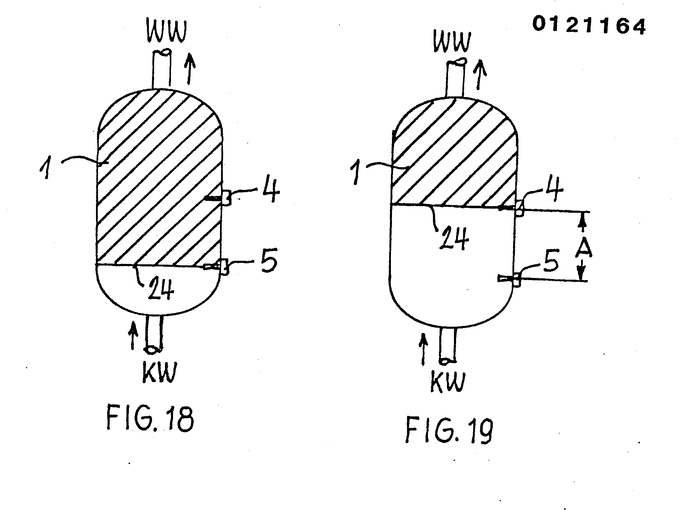

Fig.18+19 eine schematische Darstellung eines WW-Bereiters mit zwei Thermofühlern, dessen WW-Vorrat zwischen den Niveaus der beiden Thermofühler variiert.

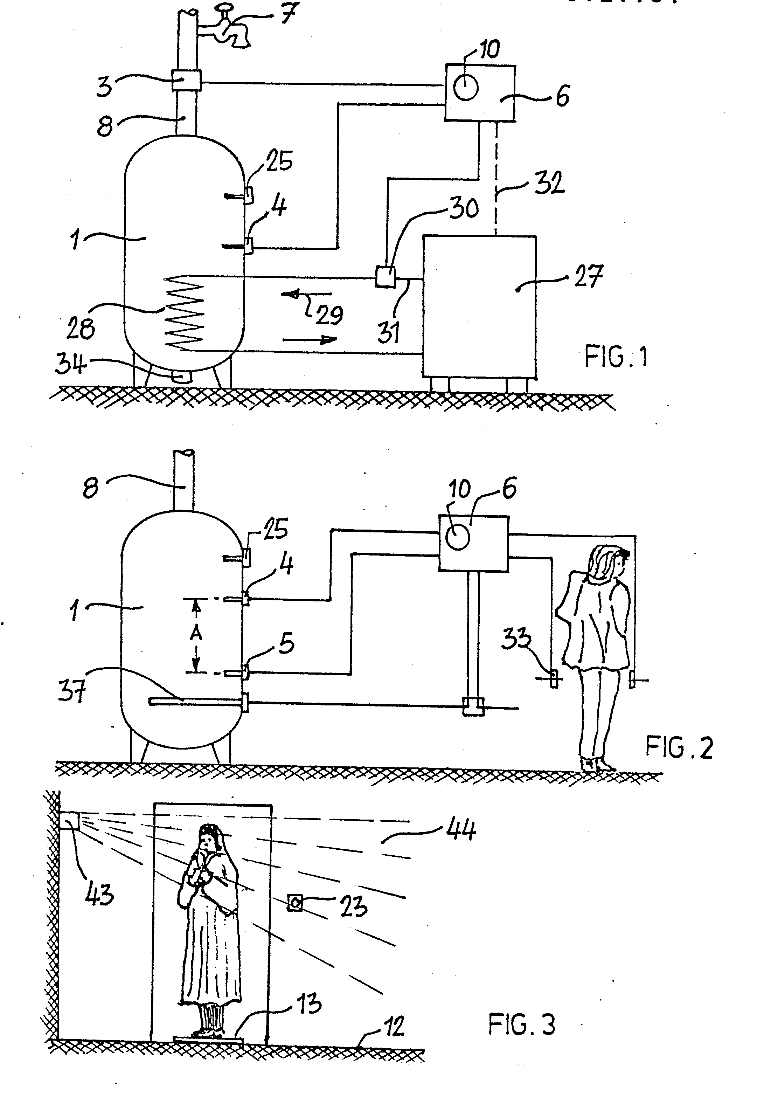

Gemäß Fig. 1 wird in bekannter Weise eine Warmwasser-Rohrleitung 8 von einem Warmwasser-Bereiter 1 mit Warmwasser' (nachfolgend nur "WW" genannt) beliefert, wobei die Wärmezufuhr 29 mittels eines von einem Heizgerät 27 über eine Zulaufleitung 31 mit Wärme versorgten Wärmetauschers 28 erfolgt. Das Heizgerät 27 kann ein Öl- oder Gaskessel, eine Wärmepumpe, eine Elektro-Heizung, eine Wärmerückgewinnungsanlage od. dgl. sein. Die Wärmezufuhr 29 wird bisher von einem im/am WW-Bereiter 1 angeordneten, direkt auf das Heizgerät 27 wirkenden Thermostaten gesteuert. Sie erfolgt unabhängig davon, ob in absehbarer Zukunft überhaupt WW benötigt wird, und wenn dies der Fall sein sollte, mit welchen WW-Mengen dann voraussichtlich zu rechnen sein wird.

Die Erfindung sieht nun vor, daß im/am WW-Bereiter 1 zumindest ein fest installierter oder ortsveränderbar angebrachter Thermofühler 4 angeordnet wird, dessen Meßwerte durch Zwischenschaltung eines Regelgeräts 6 indirekt die Wärmezufuhr 29 durch Steuerung eines in der Zulaufleitung 31 zum Wärmetauscher 28 angeordneten Kontrollgeräts 30, wie Pumpe, Ventil od. dgl., kontrollieren oder über eine Steuerleitung 32 auf das Heizgerät 27 einwirken. Die indirekte Steuerung der Wärmezufuhr 29 wird gemäß der Erfindung durch einen einen voraussichtlich baldigen Impulsgeber 3 wesentlich mit beeinflußt. Ein solcher Impulsgeber könnte, wie Fig. 1 zeigt, beispielsweise ein in der WW-Rohrleitung 8 angeordneter Strömungswächter 3 sein, der eine an einer Zapfstelle 7 vorgenommene WW-Entnahme anzeigt und somit zu erkennen gibt, daß überhaupt Menschen im Hause anwesend sind, für die WW vorzuhalten ist. Als Impulsgeber könnte selbstverständlich auch ein in eine Kaltwasserleitung 34 (zB in die Kaltwasser-Hauptleitung nahe der Wasseruhr) eingesetzter Strömungswächter, eine im Hause an geeignetem Platz angeordnete Lichtschranke 33 (siehe Fig. 2), ein im Fußboden 12, beispielsweise unter einem Fußabstreifer angeordneter Trittschalter 13, ein Handschalter 23 oder ein Ultraschallgerät 43 mit einem in den Eingangsbereich eines Hauses hinein gerichteten Schallkegel 44 sein, dessen Durchschreiten die Anwesenheit von Menschen im Hause an das Regelgerät 6 meldet und damit einen möglicherweise baldigen WW-Verbrauch, wie Händewaschen, Spülen, Duschen, baden od. dgl., anzeigt (siehe Fig. 3).

Das Regelgerät 6 kann nun, nach vom Thermofühler 4 festgestellter Unterschreitung einer gewünschten, vom Verbraucher vorher beliebig einstellbarer WW-Soll-Temperatur $T_{sW}$ und gleichzeitiger, von zumindest einem der vorstehend genannten Impulsgeber 3,13,23,33 oder 43 besorgter Anzeige, daß überhaupt Menschen im Hause sind, dafür Sorge tragen, daß die Wärmezufuhr 29 zum WW-Bereiter 1 eingeleitet wird. Es kann über eine Steuerleitung das Kontrollgerät 30 in Form einer Pumpe, eines Ventils od. dgl. in Betrieb setzen, um die Wärmezufuhr 29 zum WW-Bereiter 1 zu initiieren. Es wird diesen Steuerimpuls zum Kontrollgerät 30 nicht geben, sofern ein die Anwesenheit von Menschen anzeigender Impuls seitens eines der genannten Impulsgeber, die jeder für sich, aber auch miteinander kombiniert arbeiten können, ausbleibt, auch wenn die gewünschte WW-Soll-Temperatur $T_{sW}$ im WW-Bereiter 1 längst unterschritten ist. Allerdings sollte das Regelgerät 6 so eingerichtet sein, daß es bei einer vom Thermofühler 4 gemeldeten Erreichung einer WW-Mindesttemperatur $T_{mW}$ im WW-Bereiter 1 oder gar bei einer nur wenig über dem Gefrierpunkt von Wasser liegenden Temperatur die Wärmezufuhr initiiert, auch wenn keine Menschen im Hause sind. Auf diese Weise muß der Gefahr des Einfrierens des ganzen Leitungssystems vorgebeugt werden.

Anstelle des von einem Impulsgeber gegebenen Impulses an das Regelgerät 6 oder in Verbindung mit diesem könnte das Regelgerät 6 auch mit einer Zeitschaltuhr 10 gekoppelt sein, die auf einen beliebigen, in der Zukunft liegenden Zeitpunkt einstellbar sein sollte, zu dem sie automatisch, also ohne Vorliegen eines Impulses von einem Impulsgeber, das Regelgerät 6 dazu veranlaßt, die Wärmezufuhr 29 zum WW-Bereiter 1 einzuleiten. Es wäre beispielsweise denkbar, daß eine Familie für vier Tage außer Hauses ist und beabsichtigt, am Abend des vierten Tages zurückzukehren. Dann könnte man die Zeitschaltuhr 10 so vorprogrammieren, daß sie etwa gegen 17 Uhr des nächstfolgenden vierten Tages einen Impuls an das Regelgerät 6 gibt, die Wärmezufuhr 29 zum WW-Bereiter 1 einzuleiten, so daß bei Rückkehr der Familie WW zu sofortigem Verbrauch bereitsteht. Mittels einer solchen Zeitschaltuhr 10 ließe sich die Zeit einsparen, die die WW-Erzeugung zur Erzielung eines mit WW gewünschter Brauchtemperatur gefüllten WW-Bereiters 1 benötigen würde. Außerdem ließe sich mittels der Zeitschaltuhr 10 die Gefahr des Einfrierens des Wasserrohrsystems dadurch vermeiden, daß man einen WW-Bereiter etwa alle zwei bis drei Tage einmal voll aufheizt, was man ja vorher festlegen könnte.

Schließlich könnte der dem Regelgerät 6 zuzuleitende Impuls zur Einleitung der Wärmezufuhr 29 zum WW-Bereiter 1 auch in einem telefonisch übertragenen Impuls oder gar in einem per Funk, zB über Euro-Signal, bestehen. Dieses könnte selbst aus großer Ferne, zB vom Urlaubsort, in einem großen Industriekomplex aus einer Leitzentrale oder aus dem Büro einer viele private und/oder industrielle Heiz- und/oder WW-Bereitungs-Anlagen betreuenden Wartungsfirma gesendet werden.

Es könnte andererseits aber auch der Wunsch bestehen, das Regelgerät 6 einer WW-Bereitungs- und/oder Heizungsanlage einer fernab gelegenen Zweitwohnung, eines Ferienhauses, einer im Gebirge liegenden Hütte od. dgl. vor einer Reise dorthin schon von zuhause aus derart aktivieren zu können, daß es die Wärmezufuhr 29 zum WW-Bereiter 1 und/oder zum Raumwärmeerzeuger 2 und/oder zum Raum selbst einleitet, so daß man bei Ankunft in der Zweitwohnung, im Ferienhaus, in der Gebirgshütte od. dgl. bereits einen ausreichenden WW-Vorrat und/oder behaglich beheizte Wohnräume antrifft.

Im/am WW-Bereiter 1 kann aus Sicherheitsgründen zur Feststellung der Unterschreitung einer WW-Mindesttemperatur $T_{mW}$ ein zweiter Thermofühler 25 in Gebrauchslage oberhalb des Thermofühlers 4 angeordnet sein, der mit dem Regelgerät 6 gekoppelt ist und dieses veranlaßt, bei Unterschreiten der am Regelgerät 6 einstellbaren WW-Mindesttemperatur $T_{mW}$ die Wärmezufuhr zum WW-Bereiter 1 einzuleiten und so lange aufrechtzuerhalten, bis die festgesetzte Mindesttemperatur $T_{mW}$ um einen ebenfalls am Regelgerät 6 einstellbaren Temperatur-Differenzbetrag $T_D$ wieder überschritten ist.

Im mittels eines Elektro-Heizstabes 37 beheizten WW-Bereiter 1 gemäß Fig. 2 ist außer dem Thermofühler 4 und dem gegebenenfalls vorgesehenen Thermofühler 25 ein weiterer Thermofühler 5 dargestellt, mittels dessen man den WW-Bereiter 1 komfortabler betreiben kann, als dies mit nur einem Thermofühler 4 der Fall ist.

In den sich nach oben hin entleerenden WW-Bereiter 1 fließt von unten her Kaltwasser (nachfolgend nur "KW" genannt) nach, wobei sich am Übergang zwischen dem KW- und WW- Bereich eine ziemlich stabile Schichtgrenze 24 bildet, die sich mit der nach oben hin erfolgenden WW-Entnahme entsprechend nach oben hin verschiebt.

Man könnte nun das Regelgerät 6 folgendermaßen programmieren: Das Regelgerät 6 schaltet den Elektro-Heizstab 37 oder leitet die Wärmezufuhr 29 zum WW-Bereiter 1 ein, wenn die vom Thermofühler 4 an es gemeldete WW-Ist-Temperatur $T_{iW}$ eine bestimmte WW-Soll-Temperatur $T_{sW}$ (zB 55 $^\circ$C) unterschreitet, und zwar wahlweise ohne vorherigen Impuls eines der vorstehend bereits erwähnten Impulsgeber 3,13,23,33 oder 43 oder erst nach Empfang eines solchen Impulses. Die Aufwärmung des WW-Bereiters 1 in Richtung zu dessen in Gebrauchslage unterem Ende hin erfolgt so lange, bis das Niveau der Schichtgrenze 24 zwischen KW und WW die Höhe des mit dem Regelgerät 6 verbundenen und seine Meßdaten dorthin liefernden Thermofühlers 5 erreicht, der bei Erreichen einer bestimmten, am Regelgerät 6 festgesetzten Temperatur (zB 55 °C) das Regelgerät 6 veranlaßt, den Elektro-Heizstab 37 abzuschalten oder die Wärmezufuhr 29 zum WW-Bereiter 1 hin zu unterbrechen. Dieses Wechselspiel ist in den Fig. 18 und 19 bildlich als Schema dargestellt. Fig. 18 zeigt den WW-Bereiter 1 von oben her mit WW (in Schraffur) bis zum Thermofühler 5 gefüllt, während unterhalb der Schichtgrenze 24 sich noch KW (ohne Schraffur) befindet. Bei WW-Entnahme nach oben steigt auch die Schichtgrenze 24 mit nach oben. Erreicht die Schichtgrenze 24 den mit Abstand A oberhalb des Thermofühlers 5 angeordneten Thermofühler 4, veranlaßt dieser das Regelgerät 6, den Elektro-Heizstab 37 einzuschalten oder die Wärmezufuhr zum WW-Bereiter 1 einzuleiten, was in Fig. 19 gezeigt ist.

Die Erfahrung zeigt, daß der Gesamtenergieaufwand zum Betrieb von WW-Bereitern 1 kleinen Volumens (zB 100 Liter) zur Erzeugung von insgesamt 500 Litern WW größer ist, als der Gesamtenergieaufwand eines WW-Bereiters mittleren Volumens (zB 300-500 Liter) oder großen Volumens (zB 5000 Liter), die ebenfalls 500 Liter zur Verfügung stellen sollen und hierzu wegen ihres großen Fassungsvermögens nur einmal aufgeheizt zu werden brauchen. Liegt der WW-Verbrauch beispielsweise in einem Einfamilienhaus bei 500 Liter/Tag, so ist die Energiebilanz bei Installierung eines 500-Liter-Speichers, im Vergleich zu einem 100-Liter-Speicher, um etwa 40 % günstiger, wie die Fig. 12 und 13 zeigen sollen.

Fig. 13 zeigt eine aus insgesamt fünf Nachheizphasen 41 zB eines kleinen 100-Liter-WW-Bereiters zur WW-Bereitung von jeweils 100 Litern, wobei jede Nachheizphase 41 wiederum drei Energieverbrauchsphasen, nämlich eine Anlauf-Energieverlustphase 38 des Wärmeerzeugers bzw. Heizgeräts 27, eine eine Nutz-Energiephase 39 zur Erwärmung des WW sowie eine Auskühl-Energieverlustphase 40. Zur Erzeugung von insgesamt 500 Litern WW durch einen 100-Liter-WW-Bereiter sind fünf Nachheizphasen 41 erforderlich, die insgesamt fünf Anlauf- sowie fünf Auskühl-Energieverlustphasen 38,40 verursachen, wie Fig. 13 zeigt. Demgegenüber würde ein 500-Liter-WW-Bereiter zur Erzeugung von 500 Litern WW nur einmal aufgeheizt werden müssen, wobei nur eine Nachheizphase 42 mit nur einer Anlauf-Energieverlustphase 38, einer Nutz-Energiephase 39 und einer Auskühl-Energieverlustphase 40 erforderlich wäre, wie Fig. 12 zeigt. Dabei wird deutlich, daß zwar der Nutzenergieaufwand beim 100- und 500-Liter-WW-Bereiter insgesamt etwa gleich groß sein dürfte, daß aber der Verlustenergieaufwand beim 100-Liter-WW-Bereiter wegen der zusätzlichen Nachheizphasen fünfmal so hoch ist, wie der des 500-Liter-WW-Bereiters. Zur Erzeugung von 500 Litern WW benötigt ein 100-Liter-WW-Bereiter, insgesamt etwa 40 % mehr Energie als ein einmal aufgeheizter 500-Liter-WW-Bereiter, was die in den Fig. 12 und 13 unterschiedlich hoch dargestellten Energieaufwand-Säulen eines 500- und 100-Liter-WW-Bereiters verdeutlichen sollen.

Aus vorstehend angestellten Betrachtungen ergibt sich, daß es angesichts des zu erwartenden Energieaufwandes sehr töricht und unwirtschaftlich wäre, einen größeren WW-Bereiter nach geringer WW-Entnahme immer wieder in kurzen Nachheizphasen voll mit WW zu füllen. Es ist eher sinnvoll, von vorneherein einen für den täglichen WW-Bedarf ausreichend großen WW-Breiter auszuwählen und zu installieren und diesen unter Ausnutzung der vorstehend erwähnten Vorteile täglich nur einmal aufzuheizen. Insbesondere unter dem Gesichtspunkt der Notwendigkeit, Energie sparen zu müssen, ist der heutzutage festzustellende Trend zu möglichst großen WW-Bereitern aus den vorstehend genannten Gründen vernünftig und verständlich.

Ein sehr wesentlicher Schwerpunkt der vorliegenden Erfindung besteht nun darin, solch große WW-Bereiter auch für unterschiedlich große WW-Verbrauchsmengen so energiesparend, wie möglich, auszulegen. Erfindungsgemäß erfolgt dies mittels einer sinnvoll kombinierten Anordnung zur Regelung und Überwachung der eingangs genannten Art, deren besondere erfindungsgemäße Ausgestaltung in Bezug auf die Steuerung mittlerer und großer WW-Bereiter sich aus den vorstehenden Ansprüchen ergibt.

Nachfolgend sollen bespielhaft einige Regelungsmöglichkeiten für mittlere und große WW-Bereiter sowie für eine aus mehreren einzelen WW-Bereitern gebildete WW-Speichereinheit anhand der Fig. 4 bis 17 erörtert werden:

Außer der schon erwähnten Energievergeudung infolge einer von nur einem Thermostaten gesteuerten, häufig wiederkehrenden Wiederaufheizung eines nach heutiger Praxis in der Regel ständig auf WW-Temperaturen von etwa 50-60 °C gehaltenen WW-Bereiters besteht insbesondere bei einem WW-Bereiter grossen Volumens noch der Nachteil, daß bei längerer Speicherung einer zu großen WW-Menge das WW, im Gegensatz zu kühlerem Wasser oder KW, mit der Zeit verbracken, das heißt verderben, kann. Große WW-Bereiter sollten daher so zu steuern sein, daß sie zu Zeiten mit voraussichtlich geringerem WW-Bedarf nicht randvoll mit WW gefüllt sind, sondern lediglich eine dem zu erwartenden verminderten WW-Bedarf angepaßte geringere WW-Menge bereitstellen. Auch nach ihrer Wiederaufheizung sollte das danach verfügbare WW eine in Bezug auf den voraussichtlichen WW-Verbrauch angemessene, wenn auch ausreichende Menge nicht übersteigen.

Ein für eine exakte Steuerung der Wärmezufuhr zu einem WW-Bereiter mittleren und/oder großen Volumens sprechender weiterer Grund ergibt sich noch aus folgenden Überlegungen: Bei Einsatz sogenannter regenerativer Energiequellen zur Erwärmung von WW- und/oder Heizsystemen, wie zB Sonnenkollektoren, wird der WW-Bereiter in der Regel im oberen Teil mit herkömmlichen Energiequellen, wie Öl, Gas oder Elektrowärme, nachgeheizt. Solaranlagen sind nun so ausgelegt, daß sie in der Regel mehrere Stunden benötigen, bis sie den WW-Bereiter voll erwärmt haben. Sinkt nun die Temperatur im oberen Bereich unterhalb der eingestellten Minimaltemperatur des Thermostaten ab, so fordert dieser über die herkömmlichen Energieträger Wärme an, auch wenn der WW-Bereiter mit unwesentlicher Zeitverzögerung hätte bei Sonnenschein ausschließlich durch kostenlos an die Solarkollektoren gelieferter Sonnenenergie aufgeheizt werden können. Besonders dann, wenn kein WW benötigt wird, ist dieser Umstand sehr zu bedauern, weil zur Unzeit unnötige teuere Energie sinnlos verbraucht wird.

Die WW-Bereitung für Bürohäuser, Verwaltungs- und Industriegebäude, Schulen, Universitäten u. dgl. sollte die zeitlich sehr unterschiedliche Bedarfsmenge an WW und Raumwärme zunächst ziemlich exakt ermittelt werden, wobei man für jede der o. g. Räumlichkeiten ein hierfür spezifisches Tages-, Wochen-, Monats und/oder Jahresrhythmus-Schema erstellen könnte. Man könnte zB differenzieren zwischen Tag/Nacht, Arbeitstag/Wochenende, Arbeitstag/Feiertag, Schulzeit/Ferienzeit, Universitätsbetrieb/Semesterferien, Normalarbeitszeit/ Betriebsurlaub u. dgl.

Der Einfachheit halber wird in folgendem Beispiel nur zwischen "Maximalbetrieb" oder "Maximalbedarf" (zB während eines normalen Arbeitstages) einerseits und "Minimalbetrieb" oder "Minimalbedarf" (zB während eines Wochenendes oder eines Urlaubs) andererseits unterschieden.

In den Fig. 4-7 ist eine mittels des Regelgeräts 6 schaltbare Umstellung einer Regelung der Wärmezufuhr zu einem WW-Bereiter 1 mittleren Volumens (zB 300-500 Liter) von "Maximalbetrieb" in "Minimalbetrieb" und umgekehrt schematisch dargestellt. Hierzu ist der WW-Bereiter mit vorzugsweise drei unterschiedlich hoch in/an diesem angeordneten Thermofühlern 4,5 und 14 versehen.

Fig. 4 zeigt den WW-Bereiter 1 in von oben her nahezu ganz mit WW gefülltem Zustand, wobei etwa in Höhe des zuunterst angeordneten Thermofühlers 5 sich die Schichtgrenze 24 zwischen KW und WW befindet. Meldet der Thermofühler 5 an das Regelgerät 6 das Erreichen der an diesem eingestellten gewünschten WW-Soll-Temperatur $T_{sW}$ , so unterbricht dieses die weitere Wärmezufuhr zum WW-Bereiter 1. Der in Abstand D oberhalb des Thermofühlers 5 angeordnete, ebenfalls mit dem Regelgerät 6 verbundene Thermofühler 4 meldet laufend die von ihm gemessenen WW-Temperaturwerte an das Regelgerät 6.

Bei Unterschreiten einer bestimmten gewünschten WW-Soll-Temperatur $T_{sW}$ in Höhe des Thermofühlers 4 leitet das Regelgerät 6 die Wärmezufuhr zum WW-Bereiter 1 ein, so daß dieser sich wieder von der Position des Thermofühlers 4 nach unten bis zur Position des Thermofühlers 5 hin erwärmt. Das Regelgerät 6 schaltet die Wärmezufuhr zum WW-Bereiter 1 ab, wenn ihm der Thermofühler 5 eine ausreichend hohe WW-Temperatur in seiner Höhe meldet (siehe vorne). Die Schichtgrenze 24 zwischen KW und WW pendelt also stets um die Höhe D auf- und abwärts, wie die Fig. 4+5 zeigen. Im "Maximalbetrieb" ist der WW-Bereiter 1 in dieser Ausführungsform entweder ganz oder halb mit (schraffiert gezeichnetem) WW gefüllt, so daß auch bei großer WW-Anforderung ausreichend große WW-Mengen zur Verfügung stehen.

Die Fig. 6+7 zeigen den gleichen WW-Bereiter 1, wie ihn die Fig. 4+5 zeigen, jedoch mit dem Unterschied, daß das Regelgerät 6 diesen hier auf "Minimalbetrieb" geschaltet hat. Dies hat zur Folge, daß zwar der WW-Bereiter 1 zunächst von oben her bis hinunter zum Thermofühler 5 mit WW vollgefüllt ist, bis letzterer das Regelgerät 6 zur Beendigung der Wärmezufuhr zum WW-Bereiter 1 veranlaßt, daß aber die nach oben hin erfolgende WW-Entleerung bis zum zuoberst gelegenen, nunmehr anstelle des Thermofühlers 4 dem Regelgerät 6 als maßgeblicher Temperaturgeber zugeschalteten Thermofühler 14 vonstatten gehen muß, ehe das Regelgerät 6 aufgrund der vom Thermofühler 14 gemeldeten Unterschreitung der WW-Soll-Temperatur $T_{sW}$ die Wärmezufuhr zum WW-Bereiter 1 von neuem initiiert. Die Schichtgrenze 24 zwischen KW und WW pendelt bei "Minimalbetrieb", wie die Fig. 6+7 zeigen, um das Maß E zwischen den Positionen der beiden Thermofühler 5 und 14 auf- und abwärts, wobei der dazwischen angeordnete Thermofühler 4 hierbei abgeschaltet ist. Die in Fig. 7 vor Beginn der Wiederaufheizung des WW-Bereiters 1 noch vorhandene (schraffiert dargestellte) WW-Menge reicht im "Minimalbetrieb" gerade noch zum Händewaschen, Spülen, einer Körperdusche, nicht aber für mehrere Wannen-Vollbäder aus.

In den Fig. 8-11 ist eine mittels des Regelgeräts 6 schaltbare Umstellung einer Regelung der Wärmezufuhr zu einem
WW-Bereiter 1 großen Volumens (zB 5000 Liter) von "Maximalbetrieb" in "Minimalbetrieb" und umgekehrt schematisch dargestellt. Hierzu ist der WW-Bereiter 1 mit vorzugsweise vier
unterschiedlich hoch in/an diesem angeordneten Thermofühlern
4,5,14 und 15 versehen.

Fig. 8 zeigt den WW-Bereiter 1 in von oben her nahezu ganz
mit WW gefülltem Zustand, wobei sich etwa in Höhe des zuunterst angeordneten Thermofühlers 5 die Schichtgrenze zwischen KW und WW befindet. Meldet der Thermofühler 5 an das
Regelgerät 6 das Erreichen der an diesem einstellbaren gewünschten WW-Soll-Temperatur $T_{sW}$, so unterbricht dieses
die weitere Wärmezufuhr zum WW-Bereiter 1. Der in Abstand F
oberhalb des Thermofühlers 5 angeordnete, ebenfalls mit dem
Regelgerät 6 verbundene Thermofühler 4 meldet laufend die
von ihm gemessenen WW-Temperaturwerte an das Regelgerät 6.
Bei Unterschreiten einer bestimmten gewünschten WW-Soll-Temperatur $T_{sW}$ in Höhe des Thermofühlers 4 (Fig.9) leitet das hierüber informierte Regelgerät 6 die Wärmezufuhr zum WW-Bereiter
1 ein, so daß dieser sich wieder von der Position des Thermofühlers 4 nach unten bis zur Position des Thermofühlers 5 hin
erwärmt, ehe letzterer bei Überschreitung einer bestimmten
WW-Temperatur das Regelgerät veranlaßt, die Wärmezufuhr zum
WW-Bereiter 1 zu unterbrechen, da ja der Zustand gemäß Fig.
8 wieder erreicht ist. Die Schichtgrenze 24 zwischne KW und WW
pendelt also stets um die Höhe F auf- und abwärts, wie die
Fig. 8+9 zeigen. Im "Maximalbetrieb" ist der WW-Bereiter 1
in dieser Ausführungsform entweder ganz oder zu zwei Dritteln
mit (schraffiert gezeichnetem) WW gefüllt, so daß auch bei
großer WW-Anforderung ausreichend große WW-Mengen zur Verfügung stehen.

Die Fig. 10+11 zeigen den gleichen WW-Bereiter 1, wie ihn die
Fig. 8+9 zeigen, jedoch mit dem Unterschied, daß das Regelgerät 6 diesen hier auf "Minimalbetrieb" geschaltet hat.
Dabei liefern nur die beiden Thermofühler 14,15 ihre Meßdaten an das Regelgerät 6, das ja die Wärmezufuhr zum WW-Bereiter einleitet oder stoppt. Die beiden Thermofühler 14,15 sind gemäß den Fig. 10+11 im oberen Teil des WW-Bereiters 1 vorgesehen, wobei der Thermofühler 15 etwa im oberen Drittel und der Thermofühler 14 etwa im oberen Siebtel des WW-Bereiters 1 in dieser Ausführungsform angeordnet ist. Wie bereits erwähnt, liefern bei "Minimalbetrieb" anstelle der Thermofühler 4,5 (gemäß Fig. 8+9) nunmehr die Meßfühler 14,15 (gemäß Fig. 10+11) die die Steuerung des Regelgeräts 6 maßgeblich beeinflussenden Temperaturwerte des WW. Fig. 10 zeigt hierbei bei "Minimalbetrieb" die größte vorrätige WW-Menge, Fig. 11 die kleinste vorrätie WW-Menge. Die Schichtgrenze 24 zwischen KW und WW schwankt zwischen den Positionen der beiden Thermofühler 14,15 um die Höhe G. Im "Minimalbetrieb" bleibt der große WW-Bereiter 1 selbst nach einer Nachheizung etwa in den unteren beiden Dritteln desselben ständig kalt und er entleert sich bis zur Einleitung der Wärmezufuhr bis etwa zum obersten Siebtel hin, wie die schraffierten Bereiche des WW-Bereiters 1 gemäß den Fig. 10+11 zeigen.

Die zuletzt beschriebene "Minimalbetriebs"-Schaltung bietet sich beispielsweise für die WW-Versorgung von Hausmeisterwohnungen, Chef-Büros u. dgl. größerer Gebäudekomplexe an, in denen an Wochenenden oder während eines längeren Betriebsurlaubs das ganze Volumen eines für viele Menschen ausgelegten WW-Großspeichers mit WW gefüllt zu sein braucht, sondern nur die für die Bedürfnisse einer Hausmeister-Dienstwohnung oder eines kleinen Verwaltungstrakts ausreichende WW-Menge vorzuhalten ist.

Die Fig. 14-17 zeigen schließlich, daß auch bei Betrieb einer aus mehreren einzelnen WW-Bereitern 1,11,21 gebildete WW-Groß-Speichereinheit eine Umschaltung einer die Wärmzufuhr zu den WW-Bereitern 1,11,21 steuernden Regelgeräts 6 von "Maximalbetrieb" in "Minimalbetrieb" im Prinzip möglich ist, wenn man, wie in diesem Beispiel, vier Meßfühler 4,5,14,15 in sinnvoller Weise in den drei WW-Bereitern 1,11,21 verteilt.

Obwohl auch andere Konstellationen für die Vorstehend genannten Meßfühler 4,5,14,15 möglich und denkbar sind, sind
der Meßfühler 5 im WW-Beretier 21 unten, der Meßfühler 15
im WW-Bereiter 11 mittig, der Meßfühler 4 im WW-Bereiter 11
oben und der Meßfühler 14 im WW-Bereiter 1 mittig angeordnet.

Im "Maximalbetrieb" sind die Meßfühler 4,5 mit dem Regelgerät
6 verbunden und als Lieferanten der erforderlichen WW-Temperaturwerte für die Wärmezufuhr-Regelung durch das Regelgerät
6 verantwortlich. Entsprechend den vorstehend zu den Fig.
4+5 bzw. 8+9 gemachten Erläuterungen pendelt die Schichtgrenze 24 im "Maximalbetrieb" zwischen den Positionen der
beiden Thermofühler 4,5 in den beiden WW-Bereitern 21,11,
wobei Fig. 14 den maximalen WW-Vorrat, Fig. 15 den minimalen
WW-Vorrat, jeweils bei "Maximalbetrieb", zeigen.

Im "Minimalbetrieb" sind anstelle der Meßfühler 4,5 die Meßfühler 14,15 mit dem Regelgerät 6 verbunden und als Lieferanten der erfoderlichen WW-Temperaturwerte für die Wärmezufuhr-
Regelung durch das Regelgerät 6 verantwortlich. Die Schichtgrenze 24 pendelt im "Minimalbetrieb" zwischen den Positionen
der beiden Thermofühler 14,15 in den beiden WW-Bereitern 1,11,
wobei Fig. 16 den maximalen WW-Vorrat, Fig. 17 den minimalen
WW-Vorrat, jeweils bei "Minimalbetrieb", zeigen.

Die gesamte Steuerung seitens des Regelgeräts 6 ließe sich
noch wesentlich präziser und/oder flexibler bewerkstelligen,
wenn man den/die WW-Bereiter 1,11,21 mit mehr Meßfühlern
versehen würde, die wahlweise dem Regelgerät 6 zuschaltbar
sind. Man könnte auch daran denken, die Thermofühler außenseitig am WW-Bereiter ortsveränderlich, beispielsweise an
einer Tragkonsole verschiebbar oder mittels Magneten od. dgl.
am WW-Bereiter haftbar anzuordnen und zu befestigen. Dann
könnte man für jeden besonderen Zweck, sowie auf individuelle
Bedürfnisse abgestimmt, die vorzuhaltende WW-Menge selbst
genau festlegen, indem man die maßgeblichen Thermofühler
längs der Achse des WW-Bereiters nach oben oder nach unten
hin verschiebt.

Nachdem vorstehend die erfindungsgemäße Anordnung zur Regelung und Überwachung der Wärmezufuhr zu WW-Bereitern und/oder Raumwärmeerzeugern der Einfachheit halber vorwiegend anhand der WW-Bereiter erläutert wurde, wird nachdrücklich festgestellt, daß sich diese Anordnung sinngemäß auch auf Raumwärmeerzeuger anwenden läßt. Insbesondere die Überwachung der notwendigen und/oder gewünschten Temperaturen im Raumwärmeerzeuger und/oder im zu beheizenden Raum selbst lassen sich in gleicher Weise erfassen und kontrollieren, wie dies bei den WW-Breitern der Fall ist. Man muß nur die erforderlichen Meßfühler im/am Heizsystem und/oder in den zu beheizenden Räumen eines Gebäudes anbringen und sie mit dem Regelgerät 6 oder einem diesem entsprechenden Gerät verbinden, das die Wärmezufuhr steuert (einleitet oder beendet), auf Anfrage Auskunft über die Raumwärme-Ist-Temperaturwerte $T_{iR}$ liefert oder gar Warnsignale, beispielsweise in Form von akustischen oder optischen Signalen, telefonisch übertragenen oder per Funk durchgegebenen Impulsen von sich gibt. Es wäre insbeondere auch denkbar, daß solche Auskunft und/oder Warnsignale in Form von in menschlicher Sprache seitens eines Sprach-Computers durchgegebenen Werten, zB "die Temperatur beträgt z.Zt. 55 Grad" oder "es ist Gefahr im Verzug: Die Raumtemperatur beträgt nunmehr 3 Grad" erfolgen. Diese Informationen könnte das Regelgerät 6 von sich aus herausgeben, sie könnten aber auch auf Anfrage vom Regelgerät "erfragt" werden, welcher dann - in menschlicher Sprache - die erbeten Auskünfte über den Ist-Zustand von WW-Bereitung und/oder Heizsystem erteilt.

0121164

Friedrich Müller
Im Mühlfeld 31
D-7180 Crailsheim


Patentansprüche

1. Anordnung zur Regelung und/oder zur Überwachung der
   Wärmezufuhr zu einem Warmwasser-Bereiter (WW-Bereiter)
   und/oder zur einem Raumwärmeerzeuger und/oder zu einem
   Raum, gekennzeichnet durch ein Regelgerät (6) mit einem
   einen zu erwartenden WW- und/oder Raumwärmebedarf signalisierenden Impulsgeber (3,13,23,33,43,53) und mit zumindest einem im/am WW-Bereiter (1) und/oder Raumwärmeerzeuger (2) angeordneten Thermofühler (4) zur Ermittlung der
   Ist-Temperatur ($T_i$) im/am WW-Bereiter (1) und/oder Raumwärmeerzeuger (2), wobei das Regelgerät (6)

   (a) im Falle eines vom Impulsgeber (3,13,23,33,43,53) signalisierten voraussichtlich baldigen WW-Verbrauchs aus
       einer WW-Zapfstelle (7) und/oder Raumwärmebedarfs und
       einer von einem ersten Thermofühler (4) festgestellten
       Unterschreitung einer vorher beliebig festsetzbaren
       WW- und/oder Raum-Soll-Temperatur ($T_{sW}, T_{sR}$) im WW-
       Bereiter (1) und/oder Raumwärmeerzeuger (2) und/oder
       im zu beheizenden Raum einen Steuerbefehl zur Ingangsetzung der Wärmezufuhr zum WW-Bereiter (1) und/oder
       zum Raumwärmeerzeuger (2) und/oder zum zu beheizenden
       Raum liefert oder gegebenenfalls

   (b) im Falle des Ausbleibens eines Signals des Impulsgebers (3,13,23,33,43,53), jedoch bei Unterschreitung
       eines bestimmten, vom Thermofühler (4) überwachten,
       beliebig festsetzbaren, in der Regel unterhalb der
       WW- und/oder Raum-Soll-Temperatur ($T_{sW}, T_{sR}$) liegenden WW- und/oder Raum-Mindesttemperatur ($T_{mW}, T_{mR}$)
       einen Steuerbefehl zur Ingangsetzung der Wärmezufuhr
       zum WW-Bereiter (1) und/oder zum Raumwärmeerzeuger (2)
       und/oder zum Raum liefert, und gegebenenfalls einen
       Steuerbefehl zur Beendigung der Wärmezufuhr zum
       WW-Bereiter (1) und/oder zum Raumwärmeerzeuger (2)
       und/oder zum Raum liefert, sobald die WW- und/oder Raum-Mindesttemperatur ($T_{mW}$, $T_{mR}$) um einen bestimmten Temperatur-Differenzbetrag ($T_D$) überschritten ist, und

(c) im Falle einer Überschreitung der WW- und/oder Raum-Soll-Temperatur ($T_{sW}$, $T_{sR}$) im WW-Bereiter (1) und/oder Raumwärmeerzeuger (2) und/oder im zu beheizenden Raum einen Steuerbefehl zur Beendigung der Wärmezufuhr zum WW-Bereiter (1) und/oder zum Raumwärmeerzeuger (2) und/oder zum Raum liefert.

2. Anordnung    nach Anspruch 1, _dadurch gekennzeichnet,_ daß im/am WW-Bereiter (1) zur Feststellung der Unterschreitung der WW-Mindesttemperatur ($T_{mW}$) im WW-Bereiter (1) ein zweiter Thermofühler (25) vorgesehen und mit dem Regelgerät (6) gekoppelt ist, das bei vom Thermofühler (25) gemeldeter Unterschreitung der WW-Mindesttemperatur ($T_{mW}$) einen Steuerbefehl zur Ingangsetzung der Wärmezufuhr zum WW-Bereiter (1) liefert, und das gegebenenfalls einen Steuerbefehl zur Beendigung der Wärmezufuhr zum WW-Bereiter (1) liefert, sobald die WW-Mindesttemperatur ($T_{mW}$) um einen bestimmten Temperatur-Differenzbetrag ($T_D$) überschritten ist.

3. Anordnung    nach Anspruch 1 oder 2, _dadurch gekennzeichnet,_ daß das Regelgerät (6)

(a) bei Unterschreitung einer von einem im/am WW-Bereiter (1) angeordneten ersten Thermofühler (4) gemessenen WW-Soll-Temperatur ($T_{sWo}$) einen Steuerbefehl zur Ingangsetzung der Wärmezufuhr zum WW-Bereiter (1) liefert und

(b) bei Überschreitung einer von einem im/am WW-Bereiter (1) mit Abstand (A) unterhalb des ersten Thermofühlers (4) angeordneten zweiten Thermofühler (5) gemessenen WW-Soll-Temperatur ($T_{sWu}$) einen Steuerbefehl zur Beendigung der Wärmezufuhr zum WW-Bereiter (1) liefert.

4. Anordnung    nach einem der Ansprüche 1 bis 3, _dadurch gekennzeichnet,_ daß in/an einem WW-Bereiter (1) großen Volumens zumindest drei Thermofühler (4,5,14) vorgesehen sind, wobei die von den Thermofühlern (4,14) gemessenen und an das Regelgerät (6) gemeldeten WW-Ist-Temperaturwerte $(T_{i\,max}, T_{i\,min})$ vom Regelgerät (6) wahlweise in der Weise auswertbar sind, daß dieses entweder bei zu erwartendem WW-Maximalbedarf den vom Meßfühler (4) gemessenen WW-Ist-Temperaturwert $(T_{i\,max})$ oder bei zu erwartendem WW-Minimalbedarf den vom Meßfühler (14) gemessenen WW-Ist-Temperaturwert $(T_{i\,min})$ registriert und entsprechend verarbeitet.

5. Anordnung nach Anspruch 4, dadurch gekennzeichnet, daß die Auswahl aus den beiden dem Regelgerät (6) wahlweise zur Verfügung stehenden WW-Ist-Temperaturwerten

(a) $(T_{i\,max})$ des Thermofühlers (4) bei WW-Maximalbedarf oder

(b) $(T_{i\,min})$ das Thermofühlers (14) bei WW-Minimalbedarf entweder manuell oder nach einem willkürlich festgelegten und gegebenenfalls vorort abgestimmten Zeitplan mit Hilfe einer Zeitschaltuhr (10) od. dgl erfolgt.

6. Anordnung nach einem der Ansprüche 1 bis 5, dadurch gekennzeichnet, daß außer den eine Wärmezufuhr zum WW-Bereiter (1) initiierenden Thermofühlern (4,14) zusätzlich im/am WW-Bereiter (1) die Unterbrechung der Wärmezufuhr zum WW-Bereiter (1) veranlassende, wahlweise auf das Regelgerät (6) einwirkende Thermofühler (5,15) angeordnet sind, wobei der Thermofühler (5) die Unterbrechung der Wärmezufuhr zum WW-Bereiter (1) veranlaßt, wenn der WW-Bereiter (1) bis zu seinem unteren Ende aufgeheizt ist, und wobei der mit Abstand (B) oberhalb des Thermofühlers (5) angeordnete Thermofühler (15), in Abhängigkeit von dem voraussichtlichen WW-Bedarf, die Unterbrechung der Wärmezufuhr zum WW-Bereiter (1) bereits dann veranlaßt, wenn dieser erst bis zur Position (P) des Thermofühlers (15) aufgeheizt ist.

7. Anordnung      nach Anspruch 6, dadurch gekennzeichnet,
daß die wahlweise herzustellende  Verbindung
(a) zwischen dem Thermofühler (5) und dem Regelgerät (6)
     oder
(b) zwischen dem Thermofühler (15) und dem Regelgerät (6)
entweder manuell oder nach einem willkürlich festgelegten
und gegebenenfalls auf die besonderen WW-Bedarfsverhältnisse vorort abgestimmten Zeitplan mit Hilfe einer
Zeitschaltuhr (16) od. dgl. erfolgt, wobei die Verbindung
(a) bei WW-Maximalbedarf und die Verbindung
(b) bei WW-Minimalbedarf schaltbar ist.

8. Anordnung      nach einem der Ansprüche 1 bis 7, dadurch
gekennzeichnet, daß das aufzuheizende WW-Volumen auf mehrere WW-Bereiter  (1,11,21) verteilt ist, wobei die die
Wärmezufuhr initiierenden Thermofühler (4,14) und die die
Unterbrechung der Wärmezufuhr veranlassenden Thermofühler
(5,15) in verschiedenen WW-Bereitern (1,11,21) angeordnet
sind.

9. Anordnung      nach Anspruch 8, dadurch gekennzeichnet,
daß bei Anordnung dreier WW-Bereiter (1,11,21) der Thermofühler (14) im WW-Bereiter (1), die Thermofühler (4,15) im
WW-Bereiter (11) und der Thermofühler (5) im WW-Bereiter (21)
angeordnet sind, wobei bei Wärmezufuhr
(a) bei WW-Maximalbedarf alle WW-Bereiter (1,11,21) ganz oder
(b) bei WW-Minimalbedarf der WW-Bereiter (1) ganz und der WW-
     Bereiter  (11) nur oberhalb des Thermofühlers (15)
     aufheizbar sind.

10. Anordnung      nach einem der Ansprüche 1 bis 9, dadurch
gekennzeichnet, daß der Impulsgeber (3) ein in der WW- bzw.
Kaltwasserleitung angeordneter Strömungswächter (3) ist.

11. Anordnung      nach einem der Ansprüche 1 bis 9, dadurch
gekennzeichnet, daß der Impulsgeber (13,23) ein Berührungsschalter (13,23),insbesondere ein im Fußboden (12) eingelassener oder unter Fußabstreifern, Teppichen od. dgl.
angeordneter Trittschalter (13) oder Handschalter (23) ist.

12. Anordnung      nach einem der Ansprüche 1 bis 9, <u>dadurch</u> <u>gekennzeichnet</u>, daß der Impulsgeber (33,43) eine von Menschen durchschreitbare Lichtschranke (33) oder ein von Menschen durchschreitbarer Schallkegel (44) eines Ultraschallgeräts (43) ist.

13. Anordnung .     nach einem der Ansprüche 1 bis 9, <u>dadurch</u> <u>gekennzeichnet</u>, daß der Impulsgeber (53) ein Funk- oder telefonisch übertragenes Signal (53) ist.

14. Anordnung      nach Anspruch 13, <u>dadurch gekennzeichnet</u>, daß das Funk-Signal (53) ein über große Entfernungen sendbares Funk-Signal, vorzugsweise Euro-Signal, ist.

15. Anordnung      nach einem der Ansprüche 10 bis 14, <u>dadurch</u> <u>gekennzeichnet</u>, daß die Impulsgeber (3,13,23,33,43,53) miteinander kombinierbar einsetzbar sind.

16. Anordnung      nach einem der Ansprüche 1 bis 15, <u>dadurch</u> <u>gekennzeichnet</u>, daß im/am WW-Bereiter (1,11,21), im/am Raumwärmeerzeuger (2) sowie in deren Rohrleitungssystemen (8,9) und gegebenenfalls im zu beheizenden Raum ein bei niedriger Temperatur ($T_n$) oberhalb des Wasser-Gefrierpunktes ansprechender, mit einem im/am Gebäude angeordneten Frost-Warngerät (16) verbundener Thermofühler (35) vorgesehen ist, der bei Totalausfall des Wärmeerzeugers und/oder der Automatik der Regelanordnung und/oder der Wärmezufuhr zum WW-Bereiter (1,11,21) und/oder zum Raumwärmeerzeuger (2) und/oder zum zu beheizenden Raum das Frost-Warngerät (16) zur Aussendung von Warn-Signalen veranlaßt.

17. Anordnung      nach einem der Ansprüche 1 bis 16, <u>dadurch</u> <u>gekennzeichnet</u>, daß im/am WW-Bereiter (1,11,21), im/am Raumwärmeerzeuger (2) sowie in deren Rohrleitungssystemen (8,9) und gegebenenfalls im zu beheizenden Raum ein bei zu hoher Temperatur ($T_h$) ansprechender, mit einem im/am Gebäude angeordneten Überhitzungs-Warngerät (26) verbundener Thermofühler (45), der bei zu hoher Temperatur $(T_h)$ das Überhitzungs-Warngerät (26) zur Aussendung von Warn-Signalen veranlaßt.

18. Anordnung    nach Anspruch 16 oder 17, <u>dadurch gekenn-zeichnet</u>, daß das Frost-Warngerät (16) und das Überhit-zungs-Warngerät (26) zusammen in einem Notfall-Gerät (36) integriert sind.

19. Anordnung    nach Anspruch 18, <u>dadurch gekennzeichnet</u>, daß das Notfall-Gerät (36) ein in einer WW-Bereitungsanlage und/oder einem Raumwärmeerzeugungssystem nachträglich montierbares separates Gerät ist.

20. Anordnung    nach Anspruch 18, <u>dadurch gekennzeichnet</u>, daß das Notfall-Gerät (36) ein im Regelgerät (6) integrierbares bzw. fest integriertes Gerät ist.

21. Anordnung    nach einem der Ansprüche 16 bis 20, <u>dadurch gekennzeichnet</u>, daß das Frost-Warngerät (16) und/oder das Überhitzungs-Warngerät (26) im Notfall optische und/oder akustische Warn-Signale aussendet.

22. Anordnung    nach einem der Ansprüche 16 bis 20, <u>dadurch gekennzeichnet</u>, daß das Frost-Warngerät (16) und/oder das Überhitzungs-Warngerät (26) zur Abgabe von Warn-Signalen im Notfall mittels einer automatisch durchführbaren, auf einen bestimmten, gewünschten Telefon-Anschluß (17) beliebigen Ortes frei programmierbaren Direkt-Telefondurchwahl mit dem gewünschten Telefon-Anschluß (17) jederzeit verbindbar sind.

23. Anordnung    nach einem der Ansprüche 16 bis 20, <u>dadurch gekennzeichnet</u>, daß das Frost-Warngerät (16) und/oder das Überhitzungs-Warngerät (26) zur Abgabe von Warn-Signalen im Notfall mittels eines geeigneten Funk-Senders (18) großer Reichweite mit einem entsprechenden Funk-Empfänger (19) (zB Euro-Signal-Empfänger) jederzeit verbindbar sind.

24. Anordnung        nach einem der Ansprüche 1 bis 23, dadurch gekennzeichnet, daß die Ist-Temperaturwerte ($T_{iW}$, $T_{iR}$) des WW-Bereiters (1) und/oder des Raumwärmeerzeugers (2) und/oder des Raumes und/oder der Rohrleitungen (8,9) mittels eines mit den Thermofühlern (4,5,14,15,25,35,45) verbundenen Kontrollgeräts (20) telefonisch und/oder per Funk (zB Euro-Signal-Funk) jederzeit kontrollierbar sind.

25. Anordnung        nach Anspruch 24, dadurch gekennzeichnet, daß das Kontrollgerät (20) mittels eines an dieses angeschlossenen sprechenden Computers (22) od. dgl. telefonisch und/oder per Funk jederzeit abfragbar ist.

26. Anordnung        nach einem der Ansprüche 1 bis 25, dadurch gekennzeichnet, daß die von den verschiedenen Thermofühlern (4,5,14,15,25,35,45) ausgeübten Funktionen in einem oder mehreren Meßfühlern zusammenfaßbar sind.

27. Anordnung        nach einem der Ansprüche 1 bis 26, dadurch gekennzeichnet, daß das Regelgerät (6) seine Steuerbefehle zur Einleitung oder zur Unterbrechung der Wärmezufuhr zu den WW-Bereitern (1,11,21) oder zum Raumwärmeerzeuger (2) oder zum zu beheizenden Raum in Form eines elektrischen Steuerstroms liefert, wobei in der elektrischen Steuerleitung

(a) bei Einleitung der Wärmezufuhr ein Steuerstrom fließt oder

(b) bei Unterbrechung der Wärmezufuhr kein Steuerstrom fließt.

28. Anordnung        nach einem der Ansprüche 1 bis 26, dadurch gekennzeichnet, daß das Regelgerät (6) seine Steuerbefehle zur Einleitung oder zur Unterbrechung der Wärmezufuhr zu den WW-Bereitern (1,11,21) oder zum Raumwärmeerzeuger (2) oder zum zu beheizenden Raum in Form pneumatisch oder hydraulisch übertragener Signale liefert.

29. Anordnung nach einem der Ansprüche 1 bis 28, dadurch gekennzeichnet, daß der Impulsgeber (3) im WW-Rohr angebracht ist und bei WW-Entnahme einen im Kaltwasser-Zulauf (KW-Zulauf) angebrachtes Magnetventil, Motorventil oder andere Absperrvorrichtungen öffnet und nach Beendigung der WW-Entnahme das obengenannte Magnetventil, Motorventil oder andere Absperrvorrichtungen schließt, wobei bei einer Undichtigkeit im WW-Speicher oder an anderer Stelle im Installationssystem vor dem Magnetventil, Motorventil oder anderen Absperrvorrichtungen von der Hauptleitung her kein KW mehr nachlaufen kann und der Wasseraustritt somit auf ein Minimum begrenzt wird.

30. Anordnung nach einem der Ansprüche 1 bis 29, dadurch gekennzeichnet, daß das in der KW-Zuleitung vorgesehene Ventil mit einem Zeitverzögerungsgerät versehen ist, das nach einem Impuls zum Öffnen des Ventils und bei Beendigung dieses Impulses das Schließen des Ventils über eine beliebig einstellbare Zeit verzögert und auf diese Weise während der Hauptbedarfszeiten ein ununterbrochenes Öffnen und Schließen des Ventils verhindert.

31. Anordnung nach einem der Ansprüche 1 bis 30, dadurch gekennzeichnet, daß das in der KW-Leitung angebrachte Ventil bzw. die Absperrvorrichtung ein Gerät zur Feststellung eines einseitigen Druckes von der KW-Hauptleitung her aufweist, welches bei bei höherem Druck von der KW-Zulaufseite her infolge eines Drucknachlasses auf der Boilerseite aufgrund einer möglichen Undichtigkeit im System auf der Boilerseite Warnsignale abgibt.

32. Anordnung nach einem der Ansprüche 1 bis 31, dadurch gekennzeichnet, daß die Absperrvorrichtung und Druckmeßgeräte von einem zentralen Regelgerät gesteuert werden, und daß die Warnsignale fernübertragen werden können.

FIG.1

FIG.2

FIG.3

0121164

FIG. 4

FIG. 5

FIG. 6

FIG. 7

FIG. 8

FIG. 9

FIG. 10

FIG. 11

FIG.12

FIG.13

FIG.14

FIG.15.

FIG.16

FIG.17

FIG. 18

FIG. 19